# FASCICULE DE BREVET EUROPEEN

(11) **EP 2 430 694 B1**
(45) Date de publication et mention de la délivrance du brevet: **13.08.2014**
(21) Numéro de dépôt: 10717649.7
(22) Date de dépôt: 06.05.2010
(51) Int. Cl.: H01M 8/02, H01M 8/04

(54) **PILE A COMBUSTIBLE A ENCOMBREMENT REDUIT**
KOMPAKTE BRENNSTOFFZELLE
COMPACT FUEL CELL

(30) Priorité: 11.05.2009 FR 0953095
(43) Date de publication de la demande: 21.03.2012
(73) Titulaire: Commissariat à l'Énergie Atomique et aux Énergies Alternatives, 75015 Paris (FR)
(72) Inventeur: ORIOL, Jean, F-94420 Le Plessis-Trevise (FR)
(74) Mandataire: Ilgart, Jean-Christophe
(86) Numéro de dépôt international: PCT/EP2010/056191
(87) Numéro de publication internationale: WO 2010/130630

(56) Documents cités:
- EP-A1- 1 298 754
- WO-A2-2004/086546
- FR-A1- 2 864 862
- JP-A- 61 260 551
- JP-A- 2008 010 158
- US-A1- 2003 180 589
- US-A1- 2005 221 149
- US-A1- 2006 141 308
- US-A1- 2007 287 045

## Description

### DOMAINE TECHNIQUE ET ART ANTÉRIEUR

La présente invention se rapporte à une pile à combustible à encombrement réduit.

Une pile à combustible comporte un empilement de cellules électrochimiques connectées électriquement en série et maintenues entre deux plaques de serrage. Les plaques de serrage assurent le maintien mécanique des cellules et permettent de plaquer les cellules les unes contre les autres assurant une bonne conductivité électronique entre les éléments constituant les cellules.

Au sein de chaque cellule électrochimique, a généralement lieu une réaction électrochimique exothermique. La chaleur ainsi émise doit être évacuée afin d'assurer un bon fonctionnement de la pile.

Dans le cas des piles à combustible dont la puissance est supérieure à une centaine de watts, l'évacuation de la chaleur produite est obtenue par la circulation d'un fluide caloporteur dans un conduit cheminant au sein de l'empilement. Ce fluide, après avoir été échauffé au sein de la pile, est évacué vers l'extérieur où il est refroidi, par exemple en circulant dans un échangeur thermique. La chaleur collectée dans la pile est soit réutilisée, soit dissipée. La circulation du fluide est obtenue par une pompe. Le circuit du fluide caloporteur est ouvert, le fluide entrant et sortant de la pile.

Le système de refroidissement est encombrant puisqu'il nécessite un échangeur thermique spécifique pour refroidir le fluide caloporteur circulant dans l'empilement.

Afin d'obtenir un bon fonctionnement de la pile à combustible, il est nécessaire de limiter les variations de température au sein de la pile. Pour cela, il est nécessaire de contrôler la température du fluide entrant dans la pile à combustible. De plus, le volume interne du circuit de refroidissement est tel que la charge de fluide caloporteur est non négligeable. Par conséquent, dans le cas d'une pile à combustible à fonctionnement variable, il est difficile d'assurer le maintien d'une température interne homogène du fait de l'inertie découlant de cette charge.

En outre, le débit du fluide caloporteur entrant et sortant de la pile peut également nécessiter un contrôle. Par ailleurs, dans le cas où le fluide caloporteur est aqueux, le contrôle de l'électroconductivité est requis afin de réduire la corrosion des pièces du circuit de refroidissement. On utilise de l'eau désionisée qui présente une faible électroconductivité, cependant du fait d'une ouverture dans le circuit pour introduire l'eau de refroidissement, des impuretés peuvent pénétrer dans le circuit et augmenter l'électroconductivité du caloporteur.

Il existe une pile à combustible décrite dans le document CA 2 358 257, dans laquelle l'échangeur de chaleur est disposé entre l'empilement de cellules et une des plaques de serrage. Un fluide caloporteur primaire circule dans les cellules, puis sort de l'empilement pour circuler dans l'échangeur thermique, un fluide caloporteur secondaire circulant à l'extérieur de la pile s'écoule également dans l'échangeur thermique, les deux fluides étant séparées par une plaque de métal. Un échange de calories a alors lieu entre le fluide primaire et le fluide secondaire assurant une extraction des calories du fluide primaire. Cette pile comporte un nombre important d'éléments.

US 2 007 287 045 décrit également une pile à combustible comportant un circuit traversant l'empilement de cellules et dans lequel circule un liquide. Le circuit débouche dans un réservoir réalisé dans une plaque d'extrémité, dans lequel un tube dans lequel circule un liquide de refroidissement est disposé. Le liquide de refroidissement extrait la chaleur du liquide circulant à travers les cellules. La présence d'un tube d'échange thermique dans un réservoir dans la plaque d'extrémité est relativement encombrante. En outre, ce tube sort du réservoir et traverse la plaque d'extrémité, ce qui rend la réalisation des étanchéités complexe. Par ailleurs, l'extraction des calories dans le réservoir n'est pas homogène mais a lieu autour du tube. Enfin, la présence du tube dans le réservoir provoque une perte de charge dans le circuit.

Une autre pile décrite dans le document JP 61161669 comporte des caloducs traversant l'empilement de part en part et assurant une extraction directe des calories. Ce type de système de refroidissement est complexe à réaliser puisqu'il faut notamment réaliser des étanchéités entre chaque cellule et chaque caloduc.

Il existe également des piles à combustible dans lesquels les caloducs sont interposés entres les cellules pour extraire les calories directement au sein de la pile.

Ce type d'architecture pose un certain nombre d'inconvénients. En effet, l'ensemble des caloducs intercalé dans l'empilement, dont l'écartement n'est pas nécessairement le même, est très dépendant de la compression dudit empilement qui évolue avec la température et entraine donc des contraintes mécaniques supplémentaires sur l'empilement de cellules mais aussi sur les caloducs.

En outre, la chaleur évacuée par un caloduc correspond à la chaleur produite par une cellule. Cela ne permet pas d'atteindre une bonne homogénéité de température dans la pile puisque certaines cellules peuvent fonctionner à des régimes différents pour des raisons électrochimiques, fluidiques (écoulement des gaz) ou thermiques.

Par ailleurs, il est nécessaire de concevoir un grand nombre de caloducs de faible puissance puisque le nombre de cellules est généralement compris entre 50 et 200 cellules. Généralement, en raison de la plage de température employée dans les pile à combustible à membrane échangeuse de protons (entre 60 et 80°C et un stockage/démarrage pouvant se produire en dessous de 0°C), il est nécessaire d'utiliser des fluides type alcool, qui ont un prix de revient élevé.

Il existe également des piles dans lesquelles les caloducs sont noyés dans les plaques séparatrices. Cette architecture impose d'avoir des plaques plus épaisses. En outre le coût et la complexité de fabrication sont augmentés et enfin la résistance mécanique lors de la compression peut être réduite. En outre, le remplacement et/ou le démontage d'un caloduc deviennent très contraignants et coûteux.

C'est par conséquent un but de la présente invention d'offrir une pile à combustible comportant un système d'échange de calories avec l'extérieur permettant d'offrir un refroidissement ou un chauffage sensiblement homogène et équilibré entre les différentes cellules, tout en ayant une structure simplifiée et offrant encombrement réduit.

### EXPOSÉ DE L'INVENTION

Le but précédemment énoncé est atteint par une pile à combustible comportant un empilement de cellules, des plaques d'extrémité situées aux extrémités de l'empilement, un circuit de circulation de fluide caloporteur fermé, le circuit traversant l'empilement de cellules et au moins l'une des plaques d'extrémité qui est telle qu'elle forme un accumulateur de chaleur, le fluide caloporteur cédant ses calories en excès à ladite plaque, cette chaleur étant extraite ultérieurement au moyen d'au moins un caloduc dont une extrémité est disposé dans la plaque d'extrémité formant accumulateur.

En d'autres termes, on utilise au moins l'une des plaques d'extrémité pour extraire les calories du fluide caloporteur. Par conséquent, il n'est plus requis d'échangeur de chaleur spécifique comme cela est nécessaire dans l'état de la technique. La structure de la pile à combustible est donc simplifiée et plus compacte. Par ailleurs le circuit de refroidissement est plus court et plus simple, les pertes de charge sont donc réduites.

Dans un mode particulièrement avantageux, les calories sont extraites de la plaque d'extrémité au moyen de caloducs, ce qui assure un refroidissement rapide de la plaque de serrage et donc du fluide.

Le ou les caloducs comporte (nt) une extrémité disposé dans la plaque d'extrémité, mais ne débouchant pas dans le circuit du caloporteur.

Dans le cas où le fluide caloporteur circule dans les deux plaques d'extrémité, l'évacuation de la chaleur est particulièrement efficace puisque la chaleur est évacuée en deux endroits sur le trajet de circulation du fluide. Le fluide traverse une fois l'empilement de cellules, puis traverse une des deux plaques d'extrémité dans laquelle il est refroidi. Il traverse ensuite à nouveau tout l'empilement de cellules et pénètre dans l'autre plaque d'extrémité dans laquelle il est refroidi. Le fluide caloporteur s'échauffe donc moins entre deux zones de refroidissement, i.e. sa température varie moins lors de son trajet dans les cellules, ce qui lui permet d'homogénéiser la température dans toutes les cellules. Cette extraction de la chaleur en deux endroits opposés du circuit permet d'effectuer un refroidissement sensiblement homogène de l'empilement. En effet, grâce à ce mode particulier de l'invention, le fluide caloporteur est refroidi entre les deux extrémités de l'empilement. Par conséquent, les cellules situées aux deux extrémités de l'empilement sont refroidies de manière sensiblement similaire.

Grâce à l'invention, un refroidissement plus efficace des cellules est donc possible tout en réduisant l'encombrement de la pile. En effet, pour réaliser deux zones de refroidissement dans une pile à combustible de type connue, il faudrait prévoir deux échangeurs de chaleur spécifiques, ce qui impliquerait de gérer deux entrées et deux sorties de fluide caloporteur dans la pile. Le coût, la complexité et la taille d'une telle pile seraient considérablement augmentés.

Grâce à l'invention, l'encombrement et le nombre d'éléments la composant sont réduits puisque la ou les plaques d'extrémité assure (nt) à la fois le serrage des cellules et le refroidissement des cellules. La structure de la pile est donc simplifiée. La température au sein des cellules est homogénéisée directement grâce à la circulation même du fluide caloporteur. En outre, le circuit du caloporteur étant clos, la pile ne nécessite pas la mise en oeuvre de contrôle du débit du fluide et de la température de celui-ci. Seule une pompe de circulation est requise, ainsi que des moyens classiques d'un circuit hydraulique, comme des vannes ou un vase d'expansion.

Les pertes de charge sont réduites puisque le fluide caloporteur circule dans un circuit unique, le passage dans la ou les plaques terminales est « transparent » du point de vue hydraulique puisque le fluide ne sort pas du circuit pour s'écouler dans un échangeur thermique.

La présente invention a alors principalement pour objet une pile à combustible comportant un empilement de cellules électrochimiques, une paire de plaques d'extrémité disposées de part et d'autre de l'empilement de cellules, un système de refroidissement des dites cellules, le système de refroidissement comportant un fluide caloporteur circulant en boucle fermée à travers l'empilement et dans au moins l'une des plaques d'extrémité, le fluide caloporteur, lorsqu'il sort de la cellule en contact avec ladite plaque d'extrémité, pénétrant dans la plaque d'extrémité, circulant dans la plaque d'extrémité et, lorsqu'il sort de la plaque d'extrémité, pénétrant directement dans ladite cellule en contact avec ladite plaque d'extrémité, de sorte que le fluide caloporteur, en circulant dans la plaque d'extrémité, échange des calories avec ladite plaque d'extrémité, ladite pile comportant également des moyens pour échanger avec l'extérieur des calories avec la au moins une plaque d'extrémité, lesdits moyens comprenant au moins un caloduc.

Le fluide caloporteur circule avantageusement également dans l'autre plaque d'extrémité de sorte à également échanger des calories avec celle-ci.

Une extrémité du caloduc peut alors pénétrer dans ladite au moins une plaque d'extrémité. L'autre extrémité du caloduc peut échanger des calories avec l'air ou un échangeur thermique dans lequel circule un autre fluide caloporteur.

La pile peut comporter plusieurs caloducs répartis le long du trajet du fluide caloporteur dans la plaque d'extrémité.

Avantageusement, la section de passage du circuit de refroidissement est sensiblement constante entre la traversée des cellules et la traversée de la ou les plaques d'extrémité, de manière à réduire les pertes de charge dans le circuit de refroidissement.

Le fluide caloporteur peut circuler dans plusieurs canaux dans la ou les plaques d'extrémité.

### BRÈVE DESCRIPTION DES DESSINS

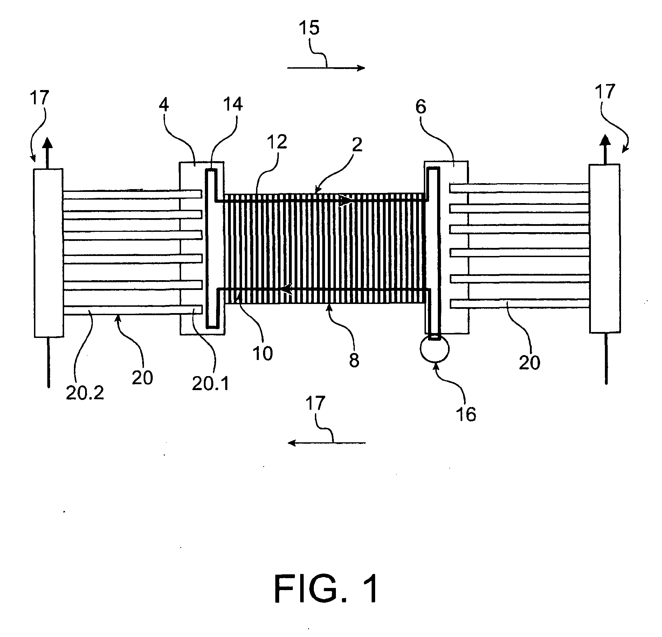

La présente invention sera mieux comprise à l'aide de la description qui va suivre et de la figure unique représentant schématiquement une pile à combustible selon la présente invention.

### EXPOSÉ DÉTAILLÉ DE MODES DE RÉALISATION PARTICULIERS

Sur la figure unique, on peut voir un exemple de pile à combustible selon la présente invention comportant un empilement de cellules électrochimiques 2 et des plaques d'extrémité 4 et 6 disposées sur les extrémités de l'empilement.

Chaque cellule électrochimique comporte, de manière connue, une électrode positive, une électrode négative et un électrolyte disposé entre les deux électrodes. De telles cellules électrochimiques étant bien connues de l'homme du métier, elles ne seront pas décrites en détail.

La présente invention sera principalement décrite dans le cas d'un refroidissement de la pile à combustible, mais la présente invention s'applique également dans un fonctionnement où la pile est réchauffée.

Les plaques d'extrémité 4, 6 exercent un effort de serrage sur l'empilement pour assurer un bon contact entre les différents éléments des cellules. Par ailleurs, les plaques d'extrémités 4, 6 sont traversées par des conduits (non représentés) pour alimenter les différentes cellules et collecter les gaz éventuellement produits.

La pile à combustible comporte également un système 8 destiné à extraire les calories produites au sein de la pile lors de son fonctionnement.

Selon la présente invention, le système 8 comporte un circuit fermé 10 formé dans les cellules et dans les plaques d'extrémité. Ce circuit fermé est formé d'un conduit 12 dans lequel circule un fluide caloporteur et d'un canal 14 réalisé dans les plaques d'extrémité. Le conduit 12 traverse les cellules 2 de part et en part et se connecte aux extrémités du canal 14. Le fluide circule dans l'empilement dans le sens de la flèche 15, puis dans la plaque d'extrémité 6, puis de ladite plaque dans l'empilement, traverse l'empilement dans le sens de la flèche 17 vers l'autre plaque d'extrémité 4, traverse la plaque 4 et de nouveau circule dans l'empilement dans le sens 15.

Le fluide caloporteur peut être aqueux ou organique en fonction des matériaux avec lesquels il entre en contact. Il peut s'agir d'eau désionisée. On peut ajouter à l'eau désionisée de l'éthylène glycol qui permet de protéger le système du gel lorsqu'il est à l'arrêt. Une huile peut également être utilisée.

Une pompe hydraulique 16 est également prévue pour mettre le fluide caloporteur en mouvement au sein du circuit fermé. D'autres éléments comme des vannes ou un vase d'expansion sont également prévus de manière classique et ne seront pas décrits en détail ici.

En outre des moyens 17 pour extraire la chaleur des plaques d'extrémités sont prévus.

De manière particulièrement avantageuse, les moyens 18 d'extraction de la chaleur sont formés par des caloducs 20 comme cela est représenté sur la figure unique. Une portion d'extrémité 20.1 de chaque caloduc pénètre dans la plaque d'extrémité du côté de la face qui n'est pas en contact avec une cellule. L'autre portion d'extrémité 20.2 est refroidie par tout type de moyen, par exemple par un circuit secondaire dans lequel circule un caloporteur, ou par des moyens de type aérotherme à convection naturelle ou à convection forcée. Les portions d'extrémité du ou des caloducs ne pénètrent pas dans le canal 14.

Les moyens 17 pourraient également être un fluide caloporteur secondaire circulant dans la plaque d'extrémité pour extraire la chaleur que le fluide caloporteur circulant dans l'empilement a cédé à la plaque.

Les caloducs et le fluide contenu dans les caloducs sont choisis en fonction de la température attendue dans le coeur de la pile à combustion. Par exemple, dans le cas où l'on souhaite maintenir une température au coeur d'une pile de 5 KW proche de 80°C, on utilise cinq caloducs remplis d'eau, ayant un diamètre externe de 16 mm.

La mise en oeuvre de caloduc associé à l'utilisation d'au moins une plaque d'extrémité comme accumulateur est particulièrement avantageuse car elle permet une extraction rapide de la chaleur de façon passive. En effet, un caloduc présente une conductivité thermique très élevée (de l'ordre de 40 fois celle du cuivre) pour une plage de fonctionnement donnée. Par conséquent, en faisant circuler le fluide caloporteur en circuit fermé uniquement dans l'empilement et dans la plaque, son volume est réduit, et en l'associant à des caloducs, l'inertie thermique totale du système de refroidissement est réduite. Le refroidissement de la pile est donc accéléré par rapport à une architecture classique.

Les plaques d'extrémité 2, 4 forment des accumulateurs de chaleur, absorbant la chaleur supplémentaire apportée par le fluide caloporteur primaire s'écoulant dans les canaux 14 réalisés dans les plaques d'extrémité. Cette chaleur accumulée est ensuite évacuée par les caloducs.

Le canal 14 prévu dans la plaque d'extrémité est tel qu'il limite la perte de charge du circuit 10. Pour cela, on prévoit que la section de passage équivalente du canal soit sensiblement égale à celle du tuyau 12. On peut prévoir que le canal soit formé d'un seul conduit dont la section de passage est égale à celle du tuyau 12, ou de plusieurs canaux dont la section de passage totale est sensiblement égale à celle du tuyau 12. Dans ce dernier cas, la surface d'échange entre le fluide caloporteur primaire et la plaque d'extrémité est plus importante, la quantité de chaleur délivrée à la plaque par le fluide est donc plus élevée. Les caloducs ne pénétrant pas dans le canal 14, il ne gène pas l'écoulement dans celui-ci.

On peut prévoir également de réaliser au sein de la plaque, une chambre remplie de fluide caloporteur connectée au conduit 12, ce volume de fluide formant un volume tampon de fluide caloporteur.

Il est bien entendu également que l'on peut prévoir plus d'un conduit circulant entre les cellules.

La mise en oeuvre de caloducs pour assurer l'échange de calories entre la plaque d'extrémité et l'environnement extérieur présente l'avantage de pouvoir disposer le ou les caloducs sur les cinq faces de la plaque d'extrémité hormis la surface en vis-à-vis de la dernière plaque séparatrice. Elle offre donc une liberté d'orientation des caloducs et sur le nombre de caloducs pouvant être inséré dans la plaque. En outre, on dispose d'une certaine liberté sur la forme du ou des caloducs, puisqu'elle est indépendante de la forme des plaques séparatrices. Le prix de revient du ou des caloducs est donc réduit.

En outre, l'épaisseur de la ou les plaques d'extrémité peut être augmentée pour y insérer les caloducs, et de manière indépendante de l'empilement.

L'association des caloducs à un système de circulation de liquide traversant l'empilement, permet d'avoir une homogénéité thermique certaine dans toutes les cellules.

Le matériau de plaques d'extrémité est choisi pour assurer une bonne conduction de la chaleur, comme un métal par exemple l'acier. Avantageusement, les plaques d'extrémité sont en aluminium, ce qui permet d'alléger la structure de la pile. On peut également envisager d'utiliser un matériau synthétique chargé en particules conductrices métalliques ou carbonées pour réaliser les plaques d'extrémité.

Dans l'exemple représenté, les deux plaques d'extrémité sont utilisées pour extraire la chaleur de la pile. Mais il est bien entendu qu'une pile dans laquelle seule une plaque sert à extraire la chaleur ne sort pas du cadre de la présente invention.

Nous allons maintenant décrire le déroulement du refroidissement de la pile selon la présente invention. Nous considérerons le trajet d'un volume de fluide caloporteur, sachant bien entendu que le circuit est entièrement rempli de fluide caloporteur et que l'extraction de chaleur s'effectue en continu.

Lors de son fonctionnement, la pile s'échauffe, plus particulièrement l'empilement de cellules. Le fluide caloporteur circule dans le circuit fermé sous l'action de la pompe. Un volume du fluide caloporteur traverse toutes les cellules de l'empilement avant de rejoindre une plaque d'extrémité, lors de son déplacement il absorbe de la chaleur, qu'il va céder à la plaque d'extrémité qui est elle-même refroidie en permanence par les caloducs. Le volume de fluide cède des calories tout le long de sa traversée de la plaque d'extrémité. Le fluide caloporteur pénètre ensuite dans l'empilement, collecte à nouveau des calories et pénètre dans l'autre plaque d'extrémité à laquelle il va céder ces calories. Par conséquent, le fluide caloporteur connaît deux étapes de refroidissement à chaque tour complet dans l'empilement. Par conséquent la puissance thermique extraite est augmentée par rapport aux systèmes connus dans lesquels une seule étape de refroidissement a lieu. Par ailleurs, les caloducs assurent un transfert thermique plus rapide que dans le cas d'un circuit secondaire dans lequel circule un fluide caloporteur.

Par ailleurs, le fluide caloporteur s'échauffant moins entre deux étapes de refroidissement, l'extraction de la chaleur est plus homogène lorsqu'il traverse l'empilement.

Le fonctionnement est similaire dans le cas d'un réchauffage, dans ce cas le fluide collecte la chaleur dans les plaques et la cède aux cellules.

La présente invention offre une solution simple pour obtenir une température homogène au sein de la pile, grâce à la circulation permanente du fluide caloporteur primaire en son coeur. De plus, le fluide restant confiné dans la pile, il n'est pas nécessaire de contrôler la température de celui-ci. Seul un contrôle de la température de la pile en son coeur est requis.

En outre, l'encombrement de la pile et sa complexité de réalisation sont notablement réduits, puisqu'elle ne comporte pas d'élément supplémentaire spécifiquement rapporté pour évacuer les calories. En effet, ce sont les plaques d'extrémité qui sont utilisées pour transférer la chaleur vers l'extérieur.

Par ailleurs, la mise en oeuvre de caloducs associés à un volume de fluide caloporteur réduit assure une extraction rapide de la chaleur. Par ailleurs, du fait de la conductivité thermique élevée des caloducs, le fonctionnement dans le cas d'une pile à fonctionnement variable est nettement amélioré, les variations de température au sein de l'empilement pouvant être plus facilement gérées.

De plus, la disposition des portions d'extrémité des caloducs le long de l'écoulement du fluide dans les plaques d'extrémité permet d'assurer une extraction optimale de la chaleur. En effet, à chaque zone du parcours du fluide dans la plaque d'extrémité, c'est un nouveau caloduc qui extrait la chaleur, et non le même fluide qui s'échauffe dans le cas d'un échangeur de chaleur.

De plus le fait de faire circuler le fluide caloporteur dans un circuit totalement fermé permet de réduire les risques d'augmentation de l'électroconductivité du fluide.

La présente invention permet d'obtenir un circuit de refroidissement avec une perte de charge faible, par exemple pour une pile produisant 5 kW électrique, on mesure une perte de pression maximale de 150 mbar. L'énergie nécessaire pour faire circuler le fluide dans des conditions stables est donc réduite.

Le système d'extraction de calories peut être réversible. On peut en effet l'utiliser pour chauffer le coeur de la pile à combustible ou maintenir le coeur de la pile à une température donnée dans le cas où l'énergie thermique fournie par les réactions exothermique est insuffisante ou inexistante pour maintenir cette température. Pour cela, les caloducs peuvent transférer de la chaleur de l'extérieur aux plaques d'extrémité, cette chaleur étant captée par le fluide caloporteur primaire circulant dans les plaques d'extrémité.

## Revendications

1. Pile à combustible comportant un empilement de cellules électrochimiques (2), une paire de plaques d'extrémité (4, 6) disposées de part et d'autre de l'empilement de cellules (2), un système de refroidissement (8) des dites cellules (2), le système de refroidissement (8) comportant un fluide caloporteur circulant en boucle fermée (10) à travers l'empilement et dans au moins l'une des plaques d'extrémité (4, 6), ledit fluide caloporteur, lorsqu'il sort de la cellule en contact avec ladite plaque d'extrémité, pénétrant dans la plaque d'extrémité, circulant dans la plaque d'extrémité et, lorsqu'il sort de la plaque d'extrémité, pénétrant directement dans ladite cellule en contact avec ladite plaque d'extrémité, de sorte que le fluide caloporteur, en circulant dans la plaque d'extrémité (4, 6), échange des calories avec ladite plaque d' extrémité (4, 6), ladite pile comportant également des moyens assurant L'échange de calories entre la au moins une plaque d'extrémité et L'extérieur, lesdits moyens comprenant au moins un caloduc.

2. Pile à combustible selon la revendication 1, dans laquelle le fluide caloporteur circule également dans l'autre plaque d'extrémité de sorte à également échanger des calories avec celle-ci.

3. Pile à combustible selon la revendication 1 ou 2, dans laquelle une extrémité (20.1) du caloduc (20) pénètre dans ladite au moins une plaque d'extrémité (4, 6).

4. Pile à combustible selon la revendication précédente, dans laquelle l'autre extrémité (20.2) du caloduc (20) échange des calories avec l'air ou un échangeur thermique (17) dans lequel circule un autre fluide caloporteur.

5. Pile à combustible selon l'une des revendications 1 à 4, comportant plusieurs caloducs (20) répartis le long du trajet du fluide caloporteur dans la plaque d'extrémité (4, 6).

6. Pile à combustible selon l'une des revendications 1 à 5, dans laquelle la section de passage du circuit de refroidissement (8) est sensiblement constante entre la traversée des cellules (2) et la traversée de la ou les plaques d'extrémité (4, 6).

7. Pile à combustible selon l'une des revendications 1 à 6, dans laquelle le fluide caloporteur circule dans plusieurs canaux dans la ou le plaques d'extrémité.

8. Pile à combustible selon l'une des revendications 1 à 6, dans laquelle la ou les plaques d'extrémité (4, 6) comportant une chambre remplie de fluide caloporteur traversé par un conduit dans lequel circule le fluide caloporteur traversant les cellules (2).

9. Pile à combustible selon l'une des revendications 1 à 8, dans laquelle la ou les plaques d'extrémité (2,4) sont en aluminium.

## Patentansprüche

1. Brennstoffzelle, welche Folgendes aufweist: einen Stapel elektrochemischer Zellen (2), ein Paar Endplatten (4, 6), welche auf beiden Seiten des Stapels von Zellen (2) angeordnet sind, sowie ein Kühlsystem (8) für diese Zellen (2), wobei das Kühlsystem (8) ein Wärmeübertragungsmittel aufweist, welches in einem geschlossenen Kreislauf (10) durch den Stapel und in mindestens einer der Endplatten (4, 6) zirkuliert, wobei das Wärmeübertragungsmittel, wenn es die mit der Endplatte in Kontakt stehende Zelle verlässt, in die Endplatte eindringt, in der Endplatte zirkuliert und, wenn es die Endplatte verlässt, direkt in die Zelle eindringt, welche in Kontakt mit dieser Endplatte ist, so dass das Wärmeübertragungsmittel durch Zirkulation in der Endplatte (4, 6) Kalorien bzw. Wärmeeinheiten mit der Endplatte (4, 6) austauscht, wobei der Stapel auch Mittel zum Austausch von Kalorien zwischen die zumindest einen Endplatte und die äußeren Umgebung aufweist, wobei diese Mittel mindestens ein Wärmeübertragungsrohr aufweisen.

2. Brennstoffzelle nach Anspruch 1, in welcher das Wärmeübertragungsmittel auch in der anderen Endplatte zirkuliert, um auch mit dieser Kalorien auszutauschen.

3. Brennstoffzelle nach Anspruch 1 oder 2, in welcher ein Ende (20.1) des Wärmeübertragungsrohrs (20) in die mindestens eine Endplatte (4, 6) eindringt.

4. Brennstoffzelle nach einem der vorhergehenden Ansprüche, in welcher das andere Ende (20.2) des Wärmeübertragungskanals (20) Kalorien mit der Atmosphäre oder einem Wärmetauscher (17), in welchem ein anderes Wärmeübertragungsmittel zirkuliert, austauscht.

5. Brennstoffzelle nach einem der Ansprüche 1 bis 4, welche mehrere Wärmeübertragungsrohre (20) aufweist, die entlang des Weges des Wärmeübertragungsmittels in der Endplatte (4, 6) verteilt sind.

6. Brennstoffzelle nach einem der Ansprüche 1 bis 5, in welcher der Durchflussquerschnitt des Kühlkreislaufs (8) im Wesentlichen konstant ist zwischen der Durchströmung der Zellen (2) und der Durchströmung der einen oder der Endplatten (4, 6).

7. Brennstoffzelle nach einem der Ansprüche 1 bis 6, in welcher das Wärmeübertragungsmittel in mehreren Kanälen in der einen oder den Endplatten (4, 6) zirkuliert.

8. Brennstoffzelle nach einem der Ansprüche 1 bis 6, in welcher die eine oder die Endplatten (4, 6) eine mit einem Wärmeübertragungsmittel gefüllte Kammer mit einem Leitungsrohr darin aufweist/aufweisen, in welchem das die Zellen (2) durchströmende Wärmeübertragungsmittel zirkuliert.

9. Brennstoffzelle nach einem der Ansprüche 1 bis 8, in welcher die eine oder die Endplatten (2, 4) aus Aluminium hergestellt ist/sind.

## Claims

1. Fuel cell comprising a stack of electrochemical cells (2), a pair of end plates (4, 6) located at each end of the stack of cells (2), a cooling system (8) for cooling said cells (2), the cooling system (8) comprising a coolant fluid circulating in closed loop (10) through the stack and in at least one of the end plates (4, 6) said coolant fluid penetrating into the end plate when exits from the cell in contact with said end plate, circulating in the end plate and, when it exits from the end plate, penetrating directly into said cell in contact with said end plate, such that the coolant fluid as it circulates in the end plate (4, 6), exchanges heat with said end plate (4, 6), said fuel cell also comprising means for exchanging heat between the at least one end plate and the outside, said means comprising at least one heat pipe.

2. Fuel cell according to claim 1, in which the coolant fluid also circulates in the other end plate so that it can also exchange heat with this other end plate.

3. Fuel cell according to claim 1 or 2, in which one end (20.1) of the heat pipe (20) penetrates into said at least one end plate (4, 6).

4. Fuel cell according to the previous claim, in which the other end (20.2) of the heat pipe (20) exchanges heat with the air or a heat exchanger (17) in which another coolant fluid is circulating.

5. Fuel cell according to any one of claims 1 to 4, comprising several heat pipes (20) distributed along the path of the coolant fluid inside the end plate (4, 6).

6. Fuel cell according to any one of claims 1 to 5, in which the passage cross-section of the cooling circuit (8) is approximately constant between the crossing through the cells (2) and the crossing through the end plate (s) (4, 6).

7. Fuel cell according to any one of claims 1 to 6, in which the coolant fluid circulates in several channels in the end plate(s).

8. Fuel cell according to any one of claims 1 to 6, in which the end plate (s) (4, 6) comprise(s) a chamber filled with coolant fluid through which a duct passes carrying the heat transfer fluid circulating through the cells (2).

9. Fuel cell according to any one of claims 1 to 8, in which the end plate (s) (2, 4) are made of aluminium.
